# EUROPEAN PATENT SPECIFICATION

(11) **EP 3 056 834 B1**
(45) Date of publication and mention of the grant of the patent: **30.05.2018**
(21) Application number: 15154482.2
(22) Date of filing: 10.02.2015
(51) Int. Cl.: F24H 3/02, B60H 1/22, F24H 9/20, H05B 3/50

(54) **Electrical heating device**
Elektrische Heizeinrichtung
Dispositif de chauffage électrique

(43) Date of publication of application: 17.08.2016
(73) Proprietor: Mahle International GmbH, 70376 Stuttgart (DE)
(72) Inventor: Celebi, Cem, 68130 Carspach (FR); Gries, Jean-Philippe, 68000 Colmar (FR); Heitz, Jérôme, 68100 Mulhouse (FR)
(74) Representative: BRP Renaud & Partner mbB Rechtsanwälte Patentanwälte Steuerberater

(56) References cited:
- EP-A1- 1 395 098
- EP-A1- 1 580 050
- EP-A1- 2 017 548
- DE-A1-102011 000 719
- DE-B3-102011 089 539

## Description

The present invention relates to an electrical heating device, in particular an auxiliary heater for a vehicle, according to the introductory clause of claim 1.

Usually, electrical heating elements are used for the generation of heat in electrical heating devices. Such electrical heat elements require a control, which usually takes place via an electronic control system. For controlling the heating element, the electronic control system has at least one control component, which is usually arranged on a printed circuit board of the electronic control system. During operation of the electrical heating device, the electronic control system develops heat and/or is heated. A corresponding heat development of the electronic control system exists in particular when the control component is configured as a switch controlling the heating element, in particular a power switch, which generates heat in particular on switching.

Such a heating device is known for example from EP 2 299 201 A1. This electrical heating device has a conductor element, which electrically connects several elements with one another which are abutting the heating elements. Patent application DE102011000719 A1 discloses another electrical heating device which represents the preamble of claim 1. In such heating devices, the need exists to realize as effective a cooling of the electronic control system as possible, in order to increase an efficiency of the heating device and/or to ensure a functional capability of the electronic control system. The present invention is therefore concerned with the problem of indicating, for a heating device of the type named in the introduction, an improved or at least alternative embodiment, which is distinguished in particular by an improved cooling of the electronic control system and/or an increased efficiency.

This problem is solved according to the invention by the subject matter of the independent claim 1. Advantageous embodiments are the subject matter of the dependent claims.

The present invention is based on the general idea of using, in an electrical heating device with a heating element and with an electronic control system, an electrical connection between a control component both for controlling the heating element and also for cooling the electronic control system. Consequently, in particular in combination with other cooling methods, an efficient or respectively improved cooling of the electronic control system takes place, which permits a functional capability of the electronic control system also at increased temperatures in the heating device and/or enables the use of a more efficient electronic control system , in particular of more efficient control components. Hereby, therefore, in particular the efficiency of the heating device can be increased. In accordance with the idea of the invention, the electrical heating device has the electrical heating element for the generation of heat and the electronic control system for controlling the heating element, wherein the electronic control system has a printed circuit board and the control component. The control component is arranged here on a front side of the printed circuit board. According to the invention, the electrical contacting of the heating device with the control component takes place via a connecting structure, which is used additionally for the electrical contacting also for cooling the electronic control system. For this, connecting structure has a connecting section which is arranged on a rear side of the printed circuit board, facing away from the control component, and is contacted electrically with the heating element. The connecting section is contacted electrically here with the control component. The connecting structure has, in addition, a cooling section, which adjoins onto the connecting section and lies flat against the printed circuit board on the rear side of the printed circuit board. Hereby, through the same structure, namely through the connecting structure, en electrical connection is created between the heating element and the control component and, at the same time, a cooling of the electronic control system, in particular of the printed circuit board, is made possible by the cooling section dissipating and/or receiving heat from the printed circuit board. The flat abutting of the cooling section on the printed circuit board increases the exchange of heat here between the cooling section and the printed circuit board, so that the cooling takes place more efficiently.

The cooling of the electronic control system by means of the cooling section can use in particular a flow of a fluid, in particular of air. This means that the connecting structure, in particular the cooling section, can be flowed against or respectively flowed around by such a flow during the operation of the heating device. This flow receives heat from the connecting structure and therefore cools the electronic control system, in particular the printed circuit board.

The electrical connection between the connecting section and the electronic control system takes place advantageously through the printed circuit board. For this, the printed circuit board can have corresponding passages, through which the connecting structure, in particular the connecting section, is electrically connected directly or via an electrical conductor, with the control component. Such a connection between the connecting structure and the control component or respectively with such an electrical conductor can take place in particular by the soldering of the connecting structure, in particular of the connecting section, with the control component or respectively with the electrical conductor.

For the electrical contacting of the connecting section with the heating element, the heating element can have an electrically conducting connecting element, in particular a pin, with which the connecting section is electrically connected. This connection between the connecting section and the connecting element is preferably realized directly here, such that the connecting element and the connecting section are contacted directly with one another.

It is also conceivable that the connecting section is electrically contacted directly with the heating element. The connecting section can take over the function of the connecting element of the heating element here and in particular can replace the connecting element of the heating element. It is advantageous here that additional components and/or additional material for realizing the heating device can be dispensed with, or respectively that the material requirement is reduced. Furthermore, the installation space requirement of the heating device can be thereby reduced.

Basically, the connecting section and the cooling section of the connecting structure can be separate components which are connected with one another. It is advantageous here if the connecting section and the cooling section are connected directly with one another. In addition, it is preferred if the connecting section and the cooling section are connected with one another in a heat-transferring manner, such that the connecting section also contributes to the cooling of the electronic control system, in particular to the heat exchange with the flow.

In preferred embodiments, the connecting section and the cooling section are constructed in one piece. This means that the connecting section and the cooling section are constructed in a uniform material and/or in a monolithic manner. Therefore, the connecting section and the cooling section can be produced, in particular formed, from the same substance or respectively material.

The cooling section and the connecting section can basically run in any desired manner relative to one another. It is conceivable, for example,that the cooling section and the connecting section run transversely to one another. Through the flat abutment of the cooling section on the printed circuit board, the connecting section runs here transversely to the printed circuit board.

Alternatively, it is conceivable that the cooling section and the connecting section run substantially parallel. Here, the connecting section runs along the printed circuit board.

For the improved cooling of the electronic control system, the cooling section can be constructed so as to be bent. Hereby, the surface of the cooling section can be increased. Consequently, in particular an improved heat exchange can be achieved between the cooling section and the flow. In addition, an improved heat exchange is possible between the cooling section and the printed circuit board. In particular, it is conceivable here that the cooling section is bent several times. The respectively bent sections can be in contact here with the adjacent bent sections or can be spaced apart therefrom.

The cooling of the electronic control system can be improved in that the heat exchange between the cooling section and the printed circuit board is increased. This can be achieved for example in that the cooling section, in particular the entire connecting structure, is produced from a material with increased heat conductivity, in particular from a metallic material.

It is conceivable in addition to arrange the cooling section on the rear side of the printed circuit board by means of a thermally conductive paste. Hereby, a corresponding heat exchange between the cooling section and the printed circuit board is improved, so that the cooling of the electronic control system takes place more efficiently. According to preferred embodiments, the thermally conductive paste is electrically insulating here, in order to prevent short-circuits between the cooling section and other components of the electronic control system.

The heating element can basically be configured here in any desired manner, in so far as it generates heat for heating a medium during the operation of the heating device. Embodiments are to be considered, for example, in which the heating element has at least one PTC element, with PTC standing for "Positive Temperature Coefficient". Such PTC elements require a correspondingly efficient electronic control system, which consequently generates a comparatively large amount of heat, so that an effective cooling of the electronic control system is required.

In advantageous embodiments, the connecting structure is produced at least partially, preferably entirely, from a metallic material containing aluminium. Particularly advantageous here are variants in which the connecting structure is produced from aluminium. Aluminium has the advantage that a heat-conductive and weight-reduced configuration of the connecting structure is possible. In addition, aluminium can be easily deformed, so that different shapes of the connecting structure, in particular of the connecting section and/or of the cooling section, can be realized in a simplified manner. Moreover using aluminium simplifies the realisation of the connection with and/or using the connecting structure.

In further advantageous embodiments, the connecting structure is produced from a metallic sheet, in particular from an aluminium sheet. Hereby, a simple and cost-efficient manufacture of the connecting structure can be realized. In particular, different configurations of the connecting structure can be realized by simple shaping and/or cutting of the sheet.

In addition, embodiments are advantageous in which the connecting structure has at least partially a coating containing copper. It is particularly advantageous here if the cooling section is provided with the copper-containing coating. Hereby, the particularly advantageous thermal conductivity of copper can be used for cooling the electronic control system.

Of course, it is also possible that the heating device has at least two such connecting structures. The connecting structures can be used here respectively for the electrical contacting of such an associated heating element with such an associated control component. It is also conceivable to use at least two such connecting structures, in order to contact such a heating element with such an associated control component. The connecting structures are advantageously separated from one another electrically here. Such a configuration can be used for example in order to electrically contact different poles of the heating element or respectively the ground of the heating element with correspondingly associated poles of the electronic control system or respectively with the ground of the electronic control system.

The electrical heating device can basically be used in any desired application. The heating device can be used for example in a vehicle in order to heat a fluid, for example air. In particular, it is conceivable to construct the electrical heating device as an auxiliary heater and to use it in a vehicle. The flow of this fluid can also be used here for heat exchange with the connecting structure, in particular with the cooling section.

For heating the fluid, the heating device advantageously has a housing which is able to be flowed through by the fluid, in which the heating element and the printed circuit board are arranged. It is preferred here if the control component is arranged on the side of the printed circuit board facing away from the fluid flow.

The flow of this fluid can be used here in order to dissipate heat from the printed circuit board via the cooling section, and thus to cool the printed circuit board and the electronic control system.

The housing can have a housing part in which the printed circuit board and/or the control component is/are arranged. This housing part, which is designated below as electronic control system housing part or the electronics box, can be constructed in one piece with the remaining housing or respectively formed integrally on the housing. It is also possible to produce the electronic box as a member separate from the rest of the housing. In this case, the electronic box can further be connected in any way conceivable to the rest of the housing, in particular by an adhesive connection, and/or arranged therein or thereon.

Further important features and advantages of the invention will emerge from the subclaims, from the drawings and from the associated figure description with the aid of the drawings.

It shall be understood that the features mentioned above and to be explained in further detail below are able to be used not only in the respectively indicated combination, but also in other combinations or in isolation, without departing from the scope of the present invention.

Preferred example embodiments of the invention are illustrated in the drawings and are explained in further detail in the following description, wherein the same reference numbers refer to identical or similar or functionally identical components.

There are shown, respectively diagrammatically:
- Fig. 1: a section through a heating device according to the invention,
- Fig. 2: the section of Fig. 1 in another example embodiment,
- Fig. 3: the section of Figs. 1 and 2 in a further example embodiment,
- Fig. 4: a rear view onto the heating device in section, in another example embodiment.

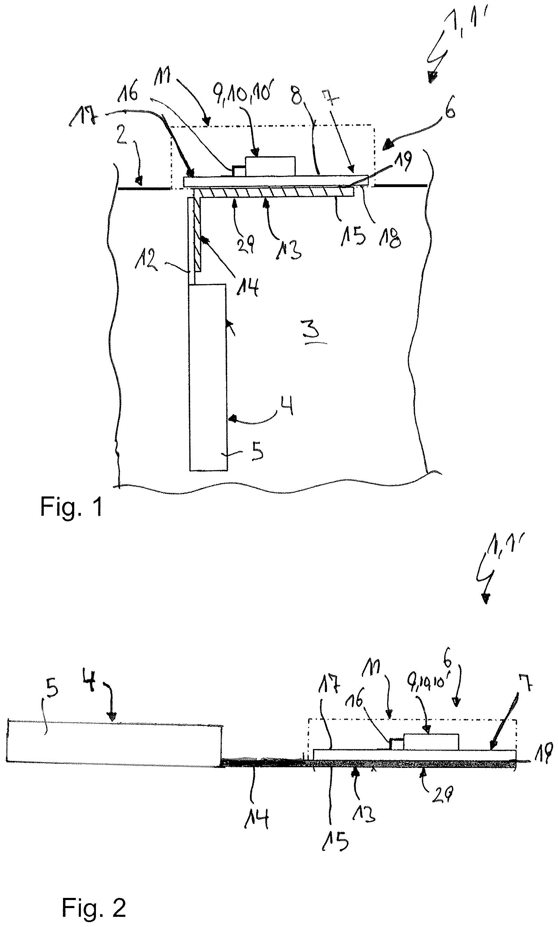

According to Fig. 1 an electrical heating device 1 has a housing 2, which has an interior 3 which is able to be flowed through. At least one heating element 4 is arranged in the interior 3, wherein in Fig. 1 only one such heating element 4 is to be seen. The heating element 4 has at least one PTC element 5 and serves for the generation of heat. The heat generated by the heating element 4 is used for the warming or respectively heating of a fluid flowing through the interior 3, in particular air. Accordingly, the heating device 1 can be configured as an auxiliary heater 1' for a vehicle which is not shown further.

For generating the heat, the heating device 4 is controlled by an electronic control system 6. The electronic control system 6 has a printed circuit board 7, which in Fig. 1 is provided on its front side 8, facing away from the interior 3, with a control component 9 for controlling the heating element 4. The control component 9 can be constructed for example as a switch 10, in particular as a power switch 10', in order to control the heating element 4. The printed circuit board 7 and the control component 9 are accommodated in a housing part 11 of the housing 2, which is designated as electronic control system housing part 11 or abbreviated to electronics box 11. The electronic box 11 can be an integral part of the housing 2 or a separate member assembled therewith.

The heating element 4 has on its side facing the printed circuit board 7 a connecting element 12, via which the heating element 4 is contacted in an electrically conducting manner with the control component 9. The connecting element 12 can be an integral part of the heating element 4 or a separate part connected to the heating element 4.The electrical contacting of the heating element 4 via the connecting element 12 takes place here via a connecting structure 13. The connecting structure 13 is configured in an L-shape in the example which is shown. The short leg of the connecting structure 13 forms a connecting section 14 here, whilst the long leg forms a cooling section 15. The connecting section 14 runs along the connecting element 12 and is in mechanical contact with the connecting element 12. The connecting section 14 and the connecting element 12 are connected with one another here by a clinch connection or respectively by a clinching method. The connecting element 12 and the connecting section 14 are electrically conductive, so that through the connection of the connecting element 12 with the connecting section 14 an electrical contact is brought about between the heating element 4 and the connecting section 14. Connection section 14 and connecting element 12 are preferably made of aluminium or an aluminium alloy, in particular shaped using a sheet. In addition, the connecting structure 13 is contacted electrically with the control component 9. For this, an electrical connecting line 16 of the control component 9 is contacted in a connection point 17 electrically with the connecting structure 13, in particular with the connecting section 14. This electrical contact can be realized by the soldering of the connecting line 17 with the connecting structure 13 in the connection point 17.

As can be seen in Fig. 1, the connecting structure 13 is arranged on a rear side 18 facing away from the front side 8 of the printed circuit board 7. The cooling section 15 of the connecting structure 13 is mounted here flat against the printed circuit board 7 on the rear side 18 of the printed circuit board 7, such that the cooling section 15 lies flat against the printed circuit board 7. In the example shown in Fig. 1, the connecting section 14 and the cooling section 15 therefore run transversely, in particular perpendicularly, to one another. The cooling section 15 serves for cooling the printed circuit board 7 and therefore the electronic control system 6. Here in particular the flow of the fluid through the interior 3 of the housing 2 is used, in order to receive heat from the connecting structure 13, in particular from the connecting section 15, and therefore to achieve a corresponding cooling of the printed circuit board 7. The connecting section 15 is mounted on the printed circuit board 7 here by means of a thermally conductive paste 19, wherein the paste 19 is electrically insulating. Consequently, by means of the connecting structure 13 on the one hand an electrical contact is realized between the heating element 4 and the control component 9, and on the other hand a cooling of the electronic control system 6 is realized.

Fig. 2 shows another example embodiment of the heating device 1 in which, by comparison with Fig. 1, only the electronic control system housing part 11 of the housing 2 is shown. The example shown in Fig. 2 differs from the example shown in Fig. 1 in addition in particular in that the connecting structure 13 has a flat course. Thereby, the cooling section 13 and the connecting section 14 run along the printed circuit board 7 or respectively parallel thereto. In addition, the heating element 4 does not have a connecting element 12. The connecting structure 13 is electrically contacted here directly with the heating element 4 via the connecting section 14. Thereby, the said connecting element 12 of the heating element 4 can be dispensed with.

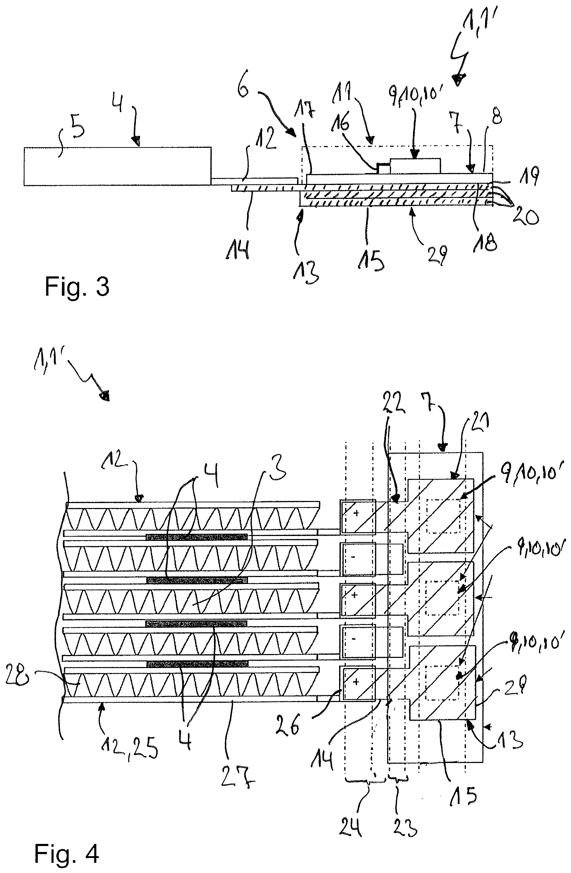

A further example of the heating device 1 is illustrated in Fig. 3. By comparison with the example shown in Fig. 2, the heating element 4 has such a connecting element 12, via which the heating element 4 is electrically contacted with the connecting section 14 of the connecting structure 13. The example shown in Fig. 3 differs from the example shown in Fig. 2 furthermore in that the cooling section 15 is bent several times. The respectively bent regions 20 are in contact here, so that an improved heat exchange can take place between the cooling section 15 and the printed circuit board 7 or respectively the cooling section 15 and the flow, in order to achieve a better cooling of the electronic control system 6.

In Fig. 4 a section through the heating device 1 can be seen, in which a view onto the rear side 18 of the printed circuit board 7 is illustrated. In this example embodiment, it can be seen that several such connecting structures 13 are provided, wherein the connecting structures 13 are constructed identically. The respective connecting structure 13 has a square basic form 21, from which a rectangular tongue 22 projects. The square basic form 21 and a first section 23 of the tongue 22 lie here flat against the rear side 18 of the printed circuit board 7 and thus form a cooling section 15 of the connecting structure 13. A second section 24 of the tongue 22, projecting from the printed circuit board 7, forms the connecting section 14 of the respective connecting structure 13. In Fig. 4 several control components 9, which are arranged on the non-visible front side 8 of the printed circuit board 7, are illustrated in dashed lines. It can be seen here that the square basic shape 21 of the respective connecting structure 13 is arranged approximately centrally to such an associated control component 9. Hereby, in addition to the cooling of the printed circuit board 7, an effective a cooling as possible of the control components 9 can be realized.

In Fig. 4 in addition four such heating elements 4 can be seen, wherein each of the connecting structures 13 is associated with such a heating element 4. The electrical contacting of a positive pole and of a negative pole between the respective heating element 4 and the associated control component 9 is realized here alternately over adjacent connecting structures 13 along the printed circuit board 7. The poles are marked accordingly with "+" or respectively "-".

In the example which is shown, the respective connecting element 12 is formed by a contact plate 25 which is constructed in an L-shape and has a first leg 26, which lies flat against the associated connecting section 14. Hereby, a clinch connection is realized between the first leg 26 of the contact plate 25 and the connecting section 14. A second leg 27 of the contact plate 25 projects from the first leg 26 into the interior 3, wherein the respective second leg 27 is configured in a U-shape and surrounds a corrugated structure 28 which is able to be flowed through by the fluid which is to be heated, in particular air. The respective second leg 27 is arranged such that the heating elements 4 which are shown are in contact with respectively two such second legs 27, wherein this contact is configured so as to be electrically insulating with the non-associated contact plate 25. Therefore, the respective heating element 4 can emit heat via the contact plates 25 to the corresponding corrugated structures 28, in order to achieve an increased efficiency of the heating of the fluid which is to be heated.

The connecting structures 13 shown in Figs. 1 to 4 are respectively constructed in one piece, i.e. of uniform material. The connecting structures 13 are preferably produced here from aluminium and coated with copper.

Furthermore, the respective connecting structure 13 is produced from one sheet 29, so that it is able to be produced in a cost-efficient manner and with a low weight. In addition, the sheet 29 can be easily deformed if required, i.e. in particular in the examples shown in Figs. 1 and 3, in order to realize a desired shape of the connecting structure 13.

## Claims

1. An electrical heating device (1), in particular auxiliary heater (1') for a vehicle,
- with an electrical heating element (4) for the generating of heat,
- with an electronic control system (6), which has a printed circuit board (7) and a control component (9), provided on a front side (8) of the printed circuit board (7), for controlling the heating element (4),
**characterized in**
- **that** the heating device (1) has a connecting structure (13) for the electrical contacting of the heating element (4) with the control component (9) and for cooling the electronic control system (6),
- **that** the connecting structure (13) has a connecting section (14), arranged on a rear side (18) of the printed circuit board (7) facing away from the control component (9), for the electrical contacting of the heating element (4),
- **that** the connecting structure (13) has a cooling section (15) adjoining the connecting section (14), which cooling section lies flat against the rear side (18) of the printed circuit board (7).

2. The heating device according to claim 1,
**characterized in**
**that** the heating element (4) has a connecting element (12) for electrical contacting with the connecting section (14).

3. The heating device according to claim 1 or 2,
**characterized in**
**that** the connecting section (14) is electrically contacted directly with the heating element (4).

4. The heating device according to one of claims 1 to 3,
**characterized in**
**that** the connecting section (14) and the cooling section (15) are constructed in one piece.

5. The heating device according to one of claims 1 to 4,
**characterized in**
**that** the cooling section (15) and the connecting section (14) run transversely to one another.

6. The heating device according to one of claims 1 to 4,
**characterized in**
**that** the cooling section (15) and the connecting section (14) run substantially parallel.

7. The heating device according to one of claims 1 to 6,
**characterized in**
**that** the cooling section (15) is bent.

8. The heating device according to one of claims 1 to 7,
**characterized in**
**that** the cooling section (15) is mounted on the rear side (18) of the printed circuit board (7) by means of a thermally conductive paste (19).

9. The heating device according to one of claims 1 to 8,
**characterized in**
**that** the heating element (4) has at least one PTC element (5).

10. The heating device according to one of claims 1 to 9,
**characterized in**
**that** the connecting structure (13) is produced at least partially from a metallic material containing aluminium.

11. The heating device according to one of claims 1 to 10,
**characterized in**
**that** the connecting structure (13) has at least partially a coating containing copper.

12. The heating device according to one of claims 1 to 11,
**characterized in**
**that** at least two such connecting structures (13) are provided, which are separated electrically from one another, wherein the respective connecting structure (13) electrically contacts the heating element (4) with the control component (9).

13. The heating device according to one of claims 1 to 12,
**characterized in**
**that** the heating device (1) has a housing (2) which is able to be flowed through by a fluid which is to be heated, in which housing the heating element (4) is arranged.

14. The heating device according to claim 13,
**characterized in**
**that** the housing (2) has an electronic control system housing part (11), in which the printed circuit board (7) is arranged.

## Patentansprüche

1. Elektrische Heizvorrichtung (1), insbesondere Zusatzheizer (1') für ein Fahrzeug,
- mit einem elektrischen Heizelement (4) zum Erzeugen von Wärme,
- mit einem elektronischen Steuersystem (6), das eine Leiterplatte (7) und ein Steuerbauteil (9) hat, das auf einer Vorderseite (8) der Leiterplatte (7) zum Steuern des Heizelements (4) vorgesehen ist,
**dadurch gekennzeichnet, dass**
- die Heizvorrichtung (1) eine Verbindungsstruktur (13) für das elektrische Kontaktieren des Heizelements (4) mit dem Steuerbauteil (9) und zum Kühlen des elektronischen Steuersystems (6) hat,
- die Verbindungsstruktur (13) einen Verbindungsabschnitt (14) hat, der auf einer Rückseite (18) der Leiterplatte (7), die von dem Steuerbauteil (9) weg zeigt, zum elektrischen Kontaktieren des Heizelements (4) eingerichtet ist,
- die Verbindungsstruktur (13) einen Kühlabschnitt (15) neben dem Verbindungsabschnitt (14) hat, wobei der Kühlabschnitt flach gegen die Rückseite (18) der Leiterplatte (7) liegt.

2. Heizvorrichtung nach Anspruch 1,
**dadurch gekennzeichnet,**
**dass** das Heizelement (4) ein Verbindungselement (12) zum elektrischen Kontaktieren mit dem Verbindungsabschnitt (14) hat.

3. Heizvorrichtung nach Anspruch 1 oder 2,
**dadurch gekennzeichnet,**
**dass** der Verbindungsabschnitt (14) direkt mit dem Heizelement (4) elektrisch kontaktiert ist.

4. Heizvorrichtung nach einem der Ansprüche 1 bis 3,
**dadurch gekennzeichnet,**
**dass** der Verbindungsabschnitt (14) und der Kühlabschnitt (15) aus einem Teil gebaut sind.

5. Heizvorrichtung nach einem der Ansprüche 1 bis 4,
**dadurch gekennzeichnet,**
**dass** der Kühlabschnitt (15) und der Verbindungsabschnitt (14) zueinander quer verlaufen.

6. Heizvorrichtung nach einem der Ansprüche 1 bis 4,
**dadurch gekennzeichnet,**
**dass** der Kühlabschnitt (15) und der Verbindungsabschnitt (14) im Wesentlichen parallel verlaufen.

7. Heizvorrichtung nach einem der Ansprüche 1 bis 6,
**dadurch gekennzeichnet,**
**dass** der Kühlabschnitt (15) gebogen ist.

8. Heizvorrichtung nach einem der Ansprüche 1 bis 7
**dadurch gekennzeichnet,**
**dass** der Kühlabschnitt (15) auf der Rückseite (18) der Leiterplatte (7) mittels einer wärmeleitfähigen Paste (19) montiert ist.

9. Heizvorrichtung nach einem der Ansprüche 1 bis 8,
**dadurch gekennzeichnet,**
**dass** das Heizelement (4) mindestens ein PTC-Element (5) hat.

10. Heizvorrichtung nach einem der Ansprüche 1 bis 9,
**dadurch gekennzeichnet,**
**dass** die Verbindungsstruktur (13) mindestens teilweise aus einem metallischen Material, das Aluminium enthält, hergestellt ist.

11. Heizvorrichtung nach einem der Ansprüche 1 bis 10,
**dadurch gekennzeichnet,**
**dass** die Verbindungsstruktur (13) mindestens teilweise eine Beschichtung hat, die Kupfer enthält.

12. Heizvorrichtung nach einem der Ansprüche 1 bis 11,
**dadurch gekennzeichnet,**
**dass** mindestens zwei solche Verbindungsstrukturen (13) vorgesehen sind, die voneinander elektrisch getrennt sind, wobei die jeweilige Verbindungsstruktur (13) das Heizelement (4) mit dem Steuerbauteil (9) elektrisch kontaktiert.

13. Heizvorrichtung nach einem der Ansprüche 1 bis 12,
**dadurch gekennzeichnet,**
**dass** die Heizvorrichtung (1) ein Gehäuse (2) hat, durch das ein Fluid fließen kann, das zu erhitzen ist, wobei das Heizelement (4) in dem Gehäuse eingerichtet ist.

14. Heizvorrichtung nach Anspruch 13
**dadurch gekennzeichnet,**
**dass** das Gehäuse (2) einen Gehäuseteil (11) eines elektronischen Steuersystems hat, in dem die Leiterplatte (7) eingerichtet ist.

## Revendications

1. Dispositif chauffant électrique (1), dans un dispositif de chauffage auxiliaire particulier (1') pour un véhicule,
- avec un élément chauffant électrique (4) pour la production de chaleur,
- avec un système de commande électronique (6), qui possède une carte à circuit imprimé (7) et un composant de commande (9), prévu sur un côté avant (8) de la carte à circuit imprimé (7), pour commander l'élément chauffant (4),
**caractérisé**
- **en ce que** le dispositif chauffant (1) possède une structure de connexion (13) pour la mise en contact électrique de l'élément chauffant (4) avec le composant de commande (9) et pour refroidir le système de commande électronique (6),
- **en ce que** la structure de connexion (13) possède une section de connexion (14), agencée sur un côté arrière (18) de la carte à circuit imprimé (7) faisant face loin du composant de commande (9), pour la mise en contact électrique de l'élément chauffant (4),
- **en ce que** la structure de connexion (13) possède une section de refroidissement (15) contiguë à la section de connexion (14), laquelle section de refroidissement se situe à plat contre le côté arrière (18) de la carte à circuit imprimé (7).

2. Dispositif chauffant selon la revendication 1,
**caractérisé**
**en ce que** l'élément chauffant (4) possède un élément de connexion (12) pour la mise en contact électrique avec la section de connexion (14).

3. Dispositif chauffant selon la revendication 1 ou 2,
**caractérisé**
**en ce que** la section de connexion (14) est mise électriquement en contact directement avec l'élément chauffant (4).

4. Dispositif chauffant selon l'une des revendications 1 à 3,
**caractérisé**
**en ce que** la section de connexion (14) et la section de refroidissement (15) sont construites d'une seule pièce.

5. Dispositif chauffant selon l'une des revendications 1 à 4,
**caractérisé**
**en ce que** la section de refroidissement (15) et la section de connexion (14) s'étendent de façon transversale l'une par rapport à l'autre.

6. Dispositif chauffant selon l'une des revendications 1 à 4,
**caractérisé**
**en ce que** la section de refroidissement (15) et la section de connexion (14) s'étendent de façon sensiblement parallèle.

7. Dispositif chauffant selon l'une des revendications 1 à 6, **caractérisé en ce que** la section de refroidissement (15) est coudée.

8. Dispositif chauffant selon l'une des revendications 1 à 7,
**caractérisé**
**en ce que** la section de refroidissement (15) est montée sur le côté arrière (18) de la carte à circuit imprimé (7) au moyen d'une pâte thermiquement conductrice (19).

9. Dispositif chauffant selon l'une des revendications 1 à 8, **caractérisé en ce que** l'élément chauffant (4) possède au moins un élément à CTP (5).

10. Dispositif chauffant selon l'une des revendications 1 à 9,
**caractérisé**
**en ce que** la structure de connexion (13) est produite au moins partiellement à partir d'une matière métallique contenant de l'aluminium.

11. Dispositif chauffant selon l'une des revendications 1 à 10,
**caractérisé**
**en ce que** la structure de connexion (13) possède au moins partiellement un revêtement contenant du cuivre.

12. Dispositif chauffant selon l'une des revendications 1 à 11,
**caractérisé**
**en ce qu'**au moins deux structures de connexion (13) de ce type sont prévues, qui sont électriquement séparées l'une de l'autre, dans lesquelles la structure de connexion respective (13) entre électriquement en contact avec l'élément chauffant (4) avec le composant de commande (9).

13. Dispositif chauffant selon l'une des revendications 1 à 12,
**caractérisé**
**en ce que** le dispositif chauffant (1) possède un logement (2) qui est susceptible d'être traversé par un fluide qui doit être chauffé, logement dans lequel l'élément chauffant (4) est agencé.

14. Dispositif chauffant selon la revendication 13,
**caractérisé**
**en ce que** le logement (2) possède une partie logeant le système de commande électronique (11), dans laquelle la carte à circuit imprimé (7) est agencée.
